# EUROPEAN PATENT SPECIFICATION

(11) **EP 1 683 725 B1**
(45) Date of publication and mention of the grant of the patent: **01.09.2010**
(21) Application number: 06001228.3
(22) Date of filing: 20.01.2006
(51) Int. Cl.: B65D 1/20, B65D 90/00

(54) **Method for manufacturing a storage reservoir of plastic material and storage reservoir**
Verfahren zur Herstellung eines Speicherbehälters aus Kunststoff und Speicherbehälter
Méthode pour la fabrication d'un réservoir de stockage en matière plastique et réservoir

(30) Priority: 20.01.2005 IT PI20050006
(43) Date of publication of application: 26.07.2006
(73) Proprietor: ZETAPLAST S.p.A., 56010 Zona Industriale Migliarino (PI) (IT)
(72) Inventor: Vitarelli, Mario, 56019 Nodica - Vecchiano (PI) (IT)
(74) Representative: Celestino, Marco

(56) References cited:
- DE-A1- 10 222 030
- US-A- 3 298 560
- US-A- 3 825 145
- US-A- 5 285 923

## Description

### Field of the invention

The present invention relates to a method for making a reservoir of plastic material for use underground or for surface use for water, which can be used as storage reservoir of drinkable water .

Furthermore, the invention relates to a water storage obtained by the method.

### Description of the prior art

As well known, a variety exists of types of storage reservoirs both for use underground or for surface use for storing liquid of different nature, such as industrial and household sewage, waste water of various origin, rainwater, water for agriculture, drinkable water, etc.

Commonly used reservoirs have cylindrical shape and are arranged with either horizontal or vertical longitudinal axis, according to the particular type of application or to the features of the installation site. The materials commonly used for storage reservoirs are concrete, steel, plastic and plastic reinforced with incorporated fiberglass. Such materials have, however, some drawbacks. In fact, the reservoirs of concrete are subject with time to crack, whereas the reservoirs of steel after long time in water are subject to corrosion. Therefore, reservoirs expected to be resistant and durable with time should have high thicknesses or should have double walls, as often used. This negatively affects the overall weight of such reservoirs that, therefore, cannot overcome predetermined size limits for allowing their transportation and for handling them at the installation site.

The problem has been in part overcome with the use of reservoirs of plastic reinforced with incorporated fiberglass that have a specific weight less than the reservoirs above cited. However, they are made through processes of production that are complex and expensive.

With the adoption of thermoplastic materials, in particular polyethylene, the overall weight of the storage reservoirs has been remarkably reduced and the costs of production have been remarkably limited. However, the reservoirs of plastic material can have problems of tightness owing to a weak structural stiffness, in particular at the apertures for connection with ducts. In particular, in case of storage reservoirs of drinkable water the apertures for connection with ducts have reduced diameters and therefore are often subject with time to wear. This can cause leakage of liquid from the storage reservoir.

US 3825145 discloses a beer keg made of plastic having a tapper plug member on the top surface and a filler plug member in the lateral surface that can be made of metal.

US5285923 discloses a tank made of plastic and provided of metal ports on the bottom for containing oil in a system for actuating hydraulically operated cylinders in tracks.

US3298560 discloses a plastic vessel comprising a plurality of tubular bodies connected to the plastic vessel through a perforated metal plate.

### Summery of the invention

It is therefore a feature of the invention to provide a storage reservoir for water, in particular drinkable water, of plastic material that is structurally easy, light, easily installable and cheap with respect to the devices of prior art.

These and other features are accomplished with a method of making a water storage reservoir for household or industrial use, according to the features of claim 1.

Preferably, the liquid that is put in the reservoir is drinkable water.

In particular, said insert has a through hole suitable for connecting the inside of the reservoir with the outside environment.

In particular, the insert has a first face that in use remains visible and a second face opposite to the first that in use is oriented towards the inside of the reservoir.

Preferably, the insert of metal material is made of copper, brass, bronze, aluminium, iron, steel.

According to another aspect of the invention, a water storage reservoir of plastic material obtained by the method and having the features of claim 2 is provided.

### Brief description of the drawings

The invention will be now shown with the following description of an exemplary embodiment thereof, exemplifying but not limitative, with reference to the attached drawings wherein:
- Figure 1 shows a perspective elevational side view of a storage reservoir for liquids, according to the invention;
- Figure 2 shows in detail a perspective view of a metal insert arranged in the reservoir of figure 1;
- Figure 3 shows the reservoir of figure 2 in a partial cross sectional view according to arrows III-III;
- Figures 4 and 5 show a perspective view of two exemplary embodiments alternative to that of figure 1 of a reservoir executed according to the invention.

### Description of preferred exemplary embodiments.

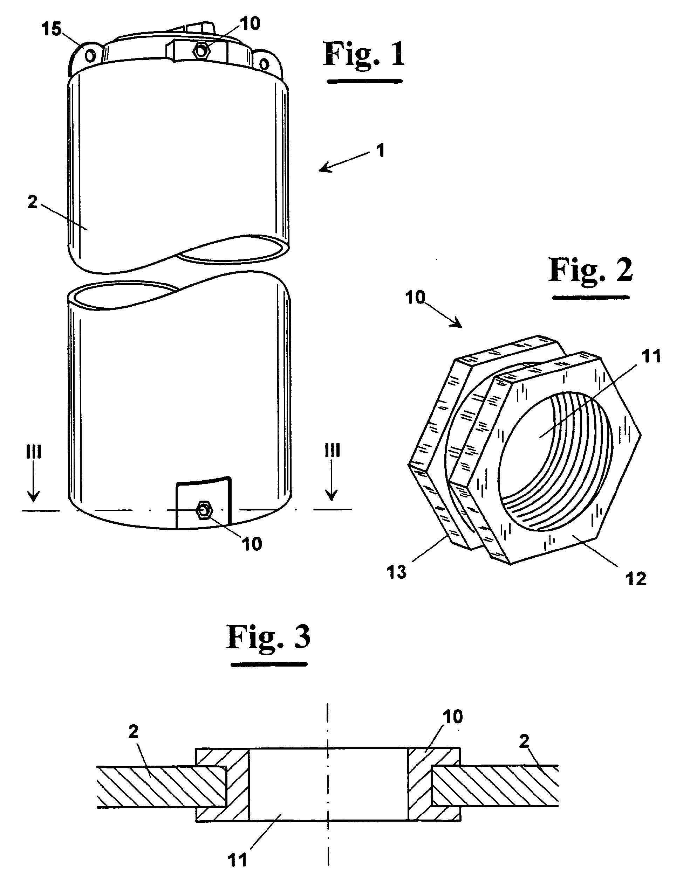

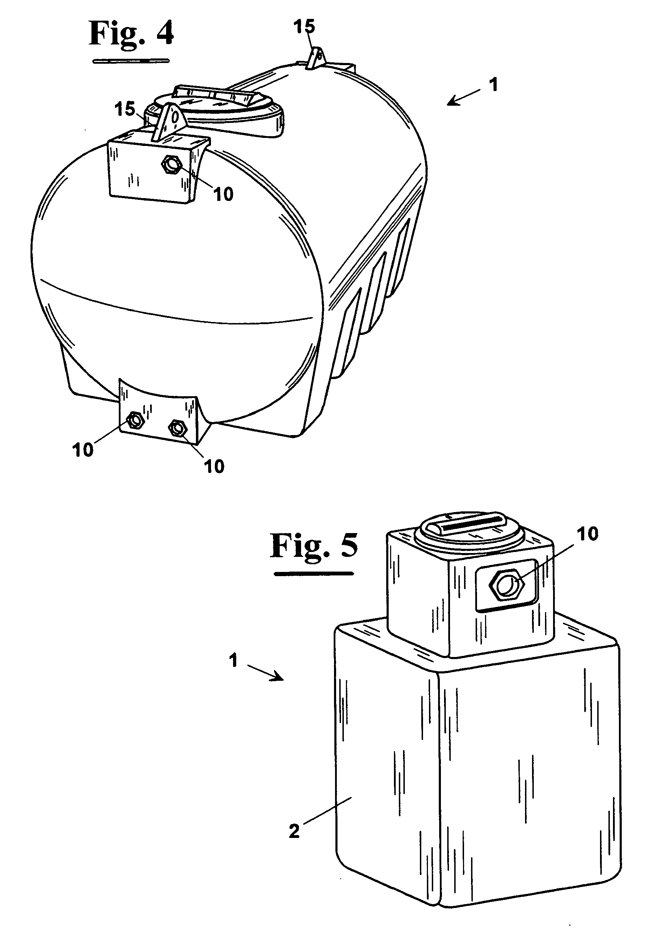

In figures 1, 4 and 5 three different possible exemplary embodiments are shown of a storage reservoir 1 for liquids, in particular for collecting drinkable water. It has a hollow body 2, for example cylindrical (figures 1 and 4), or substantially parallelepiped (figure 5), having one or more apertures for feeding the liquid into reservoir 1 and for its flow towards a delivery network. In particular, reservoir 1 at each inlet aperture, or at each outlet aperture, for the liquid has an insert of a metal material 10. The feature of using inserts of a metal material 10 allows to increase the structural stiffness of reservoir 1 at points overstressed during the use, such as the connections with ducts of the water delivery network. Furthermore, when reservoir 1 is connected to ducts of the water delivery network the necessary hydraulic tightness is ensured. In other words, this solution ensures a high structural resistance and reduces the risks of damaging the reservoir-duct interface.

In figure 2 a possible exemplary embodiment is shown in detail of a metal insert 10. It has a first face 12 with hexagonal shape, which in use remains visible, and a second face 13 opposite to face 12 and that in use is oriented towards the inside of reservoir 1. A through hole 11 connects the two faces 12 and 13 of insert 10. More in detail, insert 10, for example made of brass, is arranged directly in the mould at predetermined points before the actual moulding step. This way, the inserts 10 are embedded in the body of the reservoir of plastic material 1 extracted from the mould at the end of the moulding step of rotational type. This way, the metal insert 10 remains steadily fixed to the body 2 of reservoir 1 obtaining the advantages above described. As shown in figures 1, 4 and 5 reservoir 1 has additional parts such as gripping hooks 15.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for making a water storage reservoir (1) for household or industrial use, said water storage reservoir comprising:
- a hollow body (2) of plastic material having at least one inlet aperture and at least one outlet aperture, said hollow body (2) being suitable for receiving water;
- an insert (10) of a metal material at least at one of said apertures, said insert (10) having a through hole (11) suitable for connecting the inside of said reservoir (1) to ducts of a water delivery network;
wherein said insert (10) has a first hexagonal flange (12) that in use remains visible and a second hexagonal flange (13) opposite to the first hexagonal flange (12) that in use is oriented towards the inside of said reservoir;
said method comprising the steps of
- providing a mould for moulding said hollow body (2) of plastic material;
- preliminarily arranging in said mould said insert (10) of a metal material, in such a way that at the end of said moulding step said insert results embedded in said hollow body of said reservoir at said or each aperture;
- carrying out said moulding step as a rotational moulding in such a way that said hollow body (2) is made of a single part
wherein
at the end of said moulding step said at least one aperture of said hollow body (2) is arranged between said first hexagonal flange (12) of said insert (10), which in use remains visible, and said second hexagonal flange (13) opposite to the first hexagonal flange (12) that in use is oriented to wards the inside of said reservoir (1), such that said insert remains steadily fixed to said hollow body (2) of said reservoir (1).

2. A water storage reservoir (1) for household or industrial use, said water storage reservoir obtained according to the method of claim 1, comprising:
- a hollow body (2) of plastic material having at least one inlet aperture and at least one outlet aperture, said hollow body (2) being suitable for receiving water;
- an insert (10) of a metal material at least at one of said apertures, said insert (10) having a through hole (11) suitable for connecting the inside of said reservoir (1) to ducts of a water delivery network;
wherein said insert (10) has a first hexagonal flange (12) that in use remains visible and a second hexagonal flange (13) opposite to the first hexagonal flange (12) that in use is oriented towards the inside of said reservoir;
wherein said insert is embedded in said hollow body of said reservoir at said or each aperture;
said at least one aperture of said hollow body (2) is arranged between said first hexagonal flange (12) of said insert (10), which in use remains visible, and said second hexagonal flange (13) opposite to the first hexagonal flange (12) that in use is oriented towards the inside of said reservoir (1), such that said insert remains steadily fixed to said hollow body (2) of said reservoir (1).

## Patentansprüche

1. Ein Verfahren zum Herstellen eines Wasserspeicherbehälters (1) zur Verwendung im Haushalt oder im Gewerbe, wobei der Wasserspeicherbehälter umfasst:
- einen hohlen Körper (2) aus Kunststoffmaterial mit mindestens einer Einlassöffnung und mindestens einer Auslassöffnung, wobei der hohle Körper (2) zur Aufnahme von Wasser geeignet ist,
- einen Einsatz (10) aus einem Metallmaterial zumindest an einer der Öffnungen, wobei der Einsatz (10) ein Durchgangsloch (11) besitzt, das geeignet ist zum Verbinden der Innenseite des Behälters (1) mit Leitungen eines Wasserzufuhrnetzwerks,
wobei der Einsatz (10) einen ersten hexagonalen Flansch (12), der im Einsatz sichtbar bleibt, und einen zweiten hexagonalen Flansch (13) gegenüber dem ersten hexagonalen Flansch (12), der im Einsatz zur Innenseite des Behälters gerichtet ist, besitzt,
wobei das Verfahren die Schritte umfasst
- Vorsehen einer Form zum Formen des hohlen Körpers (2) aus Kunststoffmaterial,
- vorläufiges Anordnen des Einsatzes (10) aus einem Metallmaterial in der Form auf solcher Weise, dass am Ende des Formschritts der Einsatz eingebettet in den hohlen Körper des Behälters an der oder jeder Öffnung vorliegt,
- Ausführen des Formschritts als ein Rotationsformen auf solcher Weise, dass der hohle Körper (2) aus einem einzelnen Teil hergestellt ist bzw. wird,
wobei am Ende des Formschritts die mindestens eine Öffnung des hohlen Körpers (2) zwischen dem ersten hexagonalen Flansch (12) des Einsatzes (10), der im Einsatz sichtbar bleibt, und dem zweiten hexagonalen Flansch (13) gegenüber dem ersten hexagonalen Flansch (12), der im Einsatz zur Innenseite des Behälters (1) gerichtet ist, so angeordnet ist, dass der Einsatz zuverlässig an dem hohlen Körper (2) des Behälters (1) befestigt bleibt.

2. Ein Wasserspeicherbehälter (1) zur Verwendung im Haushalt oder im Gewerbe, wobei der Wasserspeicherbehälter (1) nach dem Verfahren gemäß Anspruch 1 erhalten ist und umfasst:
- einen hohlen Körper (2) aus Kunststoffmaterial mit mindestens einer Einlassöffnung und mindestens einer Auslassöffnung, wobei der hohle Körper (2) zur Aufnahme von Wasser geeignet ist,
- einen Einsatz (10) aus einem Metallmaterial zumindest an einer der Öffnungen, wobei der Einsatz (10) ein Durchgangsloch (11) besitzt, das geeignet ist zum Verbinden der Innenseite des Behälters (1) mit Leitungen eines Wasserzufuhrnetzwerks,
wobei der Einsatz (10) einen ersten hexagonalen Flansch (12), der im Einsatz sichtbar bleibt, und einen zweiten hexagonalen Flansch (13) gegenüber dem ersten hexagonalen Flansch (12), der im Einsatz zur Innenseite des Behälters gerichtet ist, besitzt,
wobei der Einsatz in dem hohlen Körper des Reservoirs an der oder jeder Öffnung eingebettet ist,
wobei die mindestens eine Öffnung des hohlen Körpers (2) zwischen dem ersten hexagonalen Flansch (12) des Einsatzes (10), der im Einsatz sichtbar bleibt, und dem zweiten hexagonalen Flansch (13) gegenüber dem ersten hexagonalen Flansch (12), der im Einsatz zur Innenseite des Behälters (1) gerichtet ist, so angeordnet ist, dass der Einsatz zuverlässig an dem hohlen Körper (2) des Behälters (1) befestigt bleibt.

## Revendications

1. Procédé de fabrication d'un réservoir de stockage d'eau (1) pour une utilisation domestique ou industrielle, ledit réservoir de stockage d'eau comprenant :
- un corps creux (2) de matériau plastique comportant au moins une ouverture d'entrée et au moins une ouverture de sortie, ledit corps creux (2) étant approprié pour recevoir de l'eau ;
- une pièce rapportée (10) d'un matériau métallique au moins à une desdites ouvertures, ladite pièce rapportée (10) comportant un orifice de passage (11) approprié pour raccorder l'intérieur dudit réservoir (1) à des conduites d'un réseau de distribution d'eau ;
dans lequel ladite pièce rapportée (10) comporte une première bride hexagonale (12) qui, durant l'utilisation, reste visible et une seconde bride hexagonale (13) opposée à la première bride hexagonale (12) qui, durant l'utilisation, est orientée vers l'intérieur dudit réservoir ;
ledit procédé comprenant les étapes consistant à :
- fournir un moule pour mouler ledit corps creux (2) de matériau plastique ;
- agencer de façon préliminaire, dans ledit moule, ladite pièce rapportée (10) d'un matériau métallique, de manière telle que, à la fin de ladite étape de moulage, ladite pièce rapportée soit encastrée dans ledit corps creux dudit réservoir à ladite ou à chaque ouverture ;
- réaliser ladite étape de moulage à la manière d'un moulage rotatif de manière telle que ledit corps creux (2) soit fait d'une partie unique
dans lequel
à la fin de ladite étape de moulage, ladite au moins une ouverture dudit corps creux (2) est agencée entre ladite première bride hexagonale (12) de ladite pièce rapportée (10), qui, durant l'utilisation, reste visible, et ladite seconde bride hexagonale (13) opposée à la première bride hexagonale (12) qui, durant l'utilisation, est orientée vers l'intérieur dudit réservoir (1), de sorte que ladite pièce rapportée reste fixée de façon stable audit corps creux (2) dudit réservoir (1).

2. Réservoir de stockage d'eau (1) pour une utilisation domestique ou industrielle, ledit réservoir de stockage d'eau étant obtenu selon le procédé de la revendication 1, comprenant :
- un corps creux (2) de matériau plastique comportant au moins une ouverture d'entrée et au moins une ouverture de sortie, ledit corps creux (2) étant approprié pour recevoir de l'eau ;
- une pièce rapportée (10) d'un matériau métallique au moins à une desdites ouvertures, ladite pièce rapportée (10) comportant un orifice de passage (11) approprié pour raccorder l'intérieur dudit réservoir (1) à des conduites d'un réseau de distribution d'eau ;
dans lequel ladite pièce rapportée (10) comporte une première bride hexagonale (12) qui, durant l'utilisation, reste visible et une seconde bride hexagonale (13) opposée à la première bride hexagonale (12) qui, durant l'utilisation, est orientée vers l'intérieur dudit réservoir ;
dans lequel ladite pièce rapportée est encastrée dans ledit corps creux dudit réservoir à ladite ou à chaque ouverture ;
ladite au moins une ouverture dudit corps creux (2) est agencée entre ladite première bride hexagonale (12) de ladite pièce rapportée (10), qui, durant l'utilisation, reste visible, et ladite seconde bride hexagonale (13) opposée à la première bride hexagonale (12) qui, durant l'utilisation, est orientée vers l'intérieur dudit réservoir (1), de sorte que ladite pièce rapportée reste fixée de façon stable audit corps creux (2) dudit réservoir (1).
